Europäisches Patentamt

European Patent Office

Office européen des brevets

(19)

(11) Veröffentlichungsnummer: **0 151 693**
**B1**

(12) **EUROPÄISCHE PATENTSCHRIFT**

(45) Veröffentlichungstag der Patentschrifft:
17.01.90

(21) Anmeldenummer: 84112512.3

(22) Anmeldetag: 17.10.84

(51) Int. Cl.⁴: **B 01 D 53/18, F 28 F 25/08**

(54) Stoffaustauschkolonne.

(30) Priorität: 15.12.83 CH 6679/83
19.07.84 CH 3503/84

(43) Veröffentlichungstag der Anmeldung:
21.08.85 Patentblatt 85/34

(45) Bekanntmachung des Hinweises auf die Patenterteilung:
17.01.90 Patentblatt 90/03

(84) Bennante Vertragsstaaten:
BE DE FR GB IT NL SE

(56) Entgegenhaltungen:
DE-A-1 444 456
DE-A-2 032 292
DE-B-1 261 484
US-A-3 466 151

(73) Patentinhaber: GEBRÜDER SULZER AKTIENGESELLSCHAFT
Zürcherstrasse 9
CH-8401 Winterthur (CH)

(72) Erfinder: Tauscher, Willy, Dr.
Pfaffenwiesenweg 17
CH-8404 Winterthur (CH)
Erfinder: Streiff, Felix
Jonas Furrer-Strasse 42
CH-8400 Winterthur (CH)
Erfinder: Mathys, Peter
Industriestrasse 43
CH-8212 Neuhausen (CH)

(74) Vertreter: Sparing Röhl Henseler Patentanwälte European Patent Attorneys
Rethelstrasse 123
D-4000 Düsseldorf 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

2

## Beschreibung

Die Erfindung betrifft eine Stoffaustauschkolonne, welche im Gegenstrom von einer kontinuierlichen und mindestens einer dispersen Phase durchströmt wird, wobei im Stoffaustauschteil der Kolonne Einbauelemente angeordnet sind, welche jeweils aus einer Mehrzahl von sich berührenden Lagen bestehen, wobei mindestens eine Anzahl der Lagen Strömungskanäle bildende Riffelungen aufweist, welche einen Winkel gegen die Kolonnenachse einschliessen, wobei die Riffelungen benachbarter Lagen sich kreuzen.

Aus der CH-PS-398 503 sind Stoffaustauschkolonnen bekannt, in welchen gleichartig ausgebildete Einbauelemente angeordnet sind.

Hierbei bestehen die Lagen eines jeden Einbauelementes aus geriffelten Lagen, welche sich gegenseitig berühren, wobei die Strömungskanäle bildende Riffelung eine wellen- oder zickzackförmige Kontur aufweisen kann. Die bekannten Einbauelemente werden vorzugsweise in Rektifikationskolonnen eingesetzt, wobei die flüssige Phase als Film über die Lagenoberflächen abwärts und die aufwärts strömende gasförmige Phase das freie Lückenvolumen des Einbauelementes ausfüllt.

Es handelt sich hierbei um einen Stoffaustausch zwischen zwei kontinuierlich strömenden Phasen.

In der genannten Patentschrift wird erwähnt, dass im Falle eine Oberflächenvergrösserung erwünscht ist, in den Einbauelementen zwischen je zwei geriffelten Lagen eine ungeriffelte Lage eingeschoben werden kann. In diesem Falle ist die Grösse der ungeriffelten Lagen mit derjenigen der geriffelten Lagen identisch, d.h. sie decken sich gegenseitig vollständig ab.

Im Gegensatz hierzu spielt eine Oberflächenvergrösserung der Einbauelemente bei Stoffaustauschverfahren, wie sie im Oberbegriff des Anspruchs 1 beschrieben sind, keine Rolle.

Aus der US-PS3 466 151 sind Kolonnen, beispielsweise Destillationskolonnen bekannt, in welchen Einbauelemente angeordnet sind, welche aus geriffelten Lagen bestehen, zwischen denen ebene Wandelemente, deren Flächen die geriffelten Lagen vollständig überdecken, angebracht sind. Diese Ausbildungsform soll radiale Strömungen der Phasen über den gesamten Kolonnenquerschnitt verhindern. Dieses soll dadurch erreicht werden, dass alle Einbauelemente durch eine Anzahl von sich berührenden, in Richtung der Längsachse der Kolonne durch die Wandelemente voneinander getrennten Strömungskanälen mit einem relativ kleinen Querschnitt in bezug auf den Kolonnenquerschnitt ausgebildet werden.

Demgegenüber bezieht sich die Erfindung auf Stoffaustauschverfahren, wobei in einer Kolonne mindestens eine disperse Phase mit einer kontinuierlichen Phase in Kontakt gebracht werden soll.

Es kann sich hierbei um Extraktions- oder Absorptionsverfahren handeln, wobei entweder eine kontinuierlich die Einbauelemente abwärts bzw. aufwärtsdurchströmende flüssige Phase, welche das freie Lückenvolumen zwischen den Lagen eines Einbauelementes ausfüllt, mit mindestens einer die Zwischenräume der Lagen, d.h. die Strömungskanäle aufwärts bzw. abwärts durchströmenden, dispersen Phase in Kontakt gebracht wird.

Bei zwei dispersen Phasen kann es sich beispielsweise um ein unlösliches Gemisch von Dampf- bzw. Gasblasen und Flüssigkeitströpfchen handeln.

Bei Absorptionsverfahren, bei denen die disperse Phase dampf- bzw. gasförmig vorliegt, steigen die Dampf- bzw. Gasblasen innerhalb der Strömungskanäle senkrecht auf.

Bei einer Flüssig-Flüssig-Extraktion steigt die flüssige Phase in Tröpfchenform aufwärts, falls sie leichter als die kontinuierliche Phase ist, bzw. sinkt nach unten, falls sie schwerer als die kontinuierliche Phase ist.

Wendet man die bekannten Einbauelemente, bei welchen sich die Strömungskanäle von jeweils zwei benachbarten Lagen gegeneinander offen kreuzen, bei Extraktions- bzw. Absorptionsverfahren an, so stellt man fest, dass die Querverteilung der dispersen Phase ungenügend ist, weil die disperse Phase die Einbauelemente nicht in der gewünschten Kanalrichtung, sondern, den Auftriebskräften gehorchend, mehrheitlich in direkter vertikaler Linie durchströmt.

Eine Folge davon besteht darin, dass die Verweilzeit der Tröpfchen bzw. Blasen in dem Einbauelement wegen überlagerter Zirkulationsströmungen zu kurz ist und dadurch die Stoffaustauschwirkung herabgesetzt wird, d.h. es braucht zur Einstellung der gewünschten Reinheit eine relativ grosse Anzahl von Einbauelementen und damit eine grosse Kolonnenhöhe, was wirtschaftlich unter Umständen kaum tragbar ist.

In Kolonnen mit grossem Durchmesser ist es unmöglich, eine absolut gleichmässige Vorverteilung der dispersen Phase zu erreichen. Lokale Ansammlungen der dispersen Phase bewirken jedoch die Ausbildung von grossräumigen Zirkulationsströmungen, welche die Wirksamkeit der Kolonne durch Rückvermischung stark herabsetzen können.

Würde man ausschliesslich die mit Zwischenblechen ausgerüsteten bekannten Einbauelemente verwenden, könnte wegen eines nur ungenügenden Konzentrationsausgleiches der dispersen Phase bzw. Phasen über den Kolonnenquerschnitt die erforderliche Trennwirkung nicht erreicht werden.

Die Aufteilung der Tropfen bzw. Blasen geschieht bevorzugt an den Kreuzungsstellen der gegeneinander offenen Lagen. Andererseits sammelt sich die aufsteigende disperse Phase, wenn sie zu lange in einem geneigten Kanal strömt, in dessen oberem Teil und koalesziert. Dadurch würde die Stoffaustauschfläche in einer Kolonne mit ausschliesslich, mit Zwischenblechen ausgerüsteten Einbauelementen herabgesetzt.

Der Erfindung liegt die Aufgabe zugrunde, den Stoffaustauschteil von Kolonnen, in welchen die im Oberbegriff des Anspruchs 1 angegebenen Verfahren durchgeführt werden sollen, derart auszubilden, dass sowohl eine gute Querverteilung der dispersen Phase über den Kolonnenquerschnitt, eine Koaleszenz und erneute Dispersion der Blasen oder/und Tröpfchen der dispersen Phase erreicht und eine unerwünschte Rückvermischung der kontinuierlichen Phase über die Kolonnenhöhe vermieden wird.

Im weiteren soll der Aufwand für die Erstverteilung der dispersen Phase mit einem Verteiler gering gehalten werden, was eine leistungsfähige Querverteilung in den Einbauelementen bedingt.

Gemäss der Erfindung besteht eine Lösung dieser Aufgabe darin, dass in der Kolonne zwei verschiedene Ausführungsformen von Einbauelementen eingesetzt sind, wobei eine erste Ausführungsform ausschliesslich aus geriffelten Lagen besteht, und eine zweite Ausführungsform, die sowohl geriffelte Lagen aufweist als auch ebene Zwischenbleche von der gleichen Flächengrösse wie die geriffelten Lagen.

Insbesondere für kleinere Kolonnen ist es vorteilhaft, als zweite Ausführungsform Einbauelemente zu verwenden, die aus Lagen mit sich kreuzenden Riffelungen bestehen, wobei jeweils zwischen zwei benachbarten Lagen eine ebene Zwischenlage angeordnet ist und die Elemente übereinander mit um 90° verdrehter Lagenrichtung angeordnet sind.

Für Kolonnen mit einem grösseren Durchmesser ist es von besonderem Vorteil, die zweite Ausführungsform der Einbauelemente derart auszubilden, dass jeweils zwei Gruppen von Lagen mit paralleler Riffelrichtung mit ebenen Zwischenlagen angeordnet sind, wobei jeweils die Riffelungen der einen Gruppe mit den Riffelungen der anderen Gruppe sich kreuzen.

Die der Erfindung zugrundeliegende Aufgabe wird bei den vorstehend beschriebenen Ausführungsformen mit Hilfe einer Kombination von zwei Ausführungsformen von Einbauelementen mit unterschiedlicher Wirkungsweise gelöst. So dienen die Einbauelemente mit ebenen Zwischenlagen für den Quertransport der dispersen Phase und zur Unterdrückung der axialen Vermischung, während die Einbauelemente ohne ebene Zwischenbleche für die Aufrechterhaltung der Dispersion und des Stoffaustausches sorgen.

Die Erfindung ist hierbei nicht an eine bestimmte Reihenfolge bezüglich der Anordnung der beiden Typen von Einbauelementen gebunden.

Die Anordnung dieser verschiedenen Einbauelemente kann entsprechend dem in einer Kolonne durchzuführenden Prozess angepasst werden.

So kann es beispielsweise zweckmässig bzw. sogar erforderlich sein, Einbauelemente mit Zwischenblechen nicht nur am Eintritt der dispersen Phase in den Stoffaustauschteil anzuordnen, sondern auch im Bereich des Stoffaustauschteiles zwischen Ein- und Austritt der beiden Phasen.

Dieses ist dann vorteilhaft, wenn eine erneute Querverteilung der dispersen Phase erforderlich erscheint.

Hierdurch werden übliche Zwischensammler und -verteiler oder die Belastung begrenzende Siebböden überflüssig, und die Höhe des Stoffaustauschteiles kann unter Umständen erheblich reduziert werden.

Da aus fabrikatorischen Gründen die Höhe eines Einbauelementes nicht beliebig gross gewählt werden kann, das Verhältnis dieser Höhe zum Durchmesser eines Einbauelementes aber massgebend für die Querverteilung der dispersen Phase ist, können mehrere Einbauelemente der zweiten Ausführungsform gleichgerichtet übereinander in der Kolonne eingesetzt werden, was von besonderem Vorteil für Kolonnen mit grossem Durchmesser ist.

Die der Erfindung zugrundeliegende Aufgabe kann andererseits auch dadurch gelöst werden, dass in der Kolonne gleichartige Ausgestaltungsformen von Einbauelementen angeordnet sind, bei welchen mindestens zwischen einer Anzahl von benachbarten, geriffelten Lagen jeweils eine ebene Zwischenlage angeordnet ist, die derart ausgebildet ist, dass sie nur einen Teil der geriffelten Lagen gegeneinander abdeckt.

Eine vorteilhafte Ausführungsform derartiger Einbauelemente kann darin bestehen, dass in Richtung der Längsachse der Kolonne mindestens zwei Reihen von Zwischenlagen angeordnet sind, wobei die Zwischenlagen der übereinanderliegenden Reihen gegeneinander versetzt angeordnet sind, und die seitlichen Begrenzungen bis zur Innenwand der Kolonne reichen. Hierbei können die Zwischenlagen gleiche Länge aufweisen, wobei z. B. die Höhe der Zwischenlagen etwa die Hälfte der Höhe der Strömungskanäle aufweisenden Lagen aufweist.

Bei einer anderen Ausführungsform solcher Einbauelemente kann die Höhe der Zwischenlagen mindestens nahezu der Riffelhöhe der geriffelten Lagen entsprechen, wobei sich die Zwischenlagen in der Breite bis mindestens nahezu an die seitliche Begrenzung der benachbarten geriffelten Lagen erstrecken, wobei weiterhin jede Zwischenlage mindestens eine sich mindestens nahezu über die gesamte Breite der ebenen Zwischenlage erstreckende Aussparung aufweist, deren Höhe mindestens der Riffelbreite einer geriffelten Lage entspricht. Hierbei kann jede Aussparung aus einer Mehrzahl von Teil-Aussparungen bestehen, die beispielsweise kreisförmig, quadratisch, trapezförmig oder dreieckig ausgebildet sein können.

Bei den vorstehend beschriebenen Ausführungsformen wird innerhalb eines jeden Einbauelementes sowohl für einen Quertransport der dispersen Phase und für eine Unterdrückung der axialen Vermischung als auch für die Aufrechterhaltung der Dispersion und des Stoffaustausches gesorgt.

Bei Kolonnen mit einem erfindungsgemäss ausgebildeten Stoffaustauschteil kann die disperse Phase mit Hilfe einer beliebigen Verteilvorrich-

tung auf den unteren bzw. oberen Kolonnenquerschnitt aufgegeben werden.

Bei kleinerem Kolonnenquerschnitt kann die disperse Phase beispielsweise strahlförmig zugeführt werden, während man bei grossen Kolonnendurchmessern zweckmässig zum Beispiel einen Rohrverteiler mit Lochungen oder einen Siebboden verwenden wird.

Die Erfindung wird im folgenden anhand von in der Zeichnung dargestellten Ausführungsbeispielen erläutert.

Die Fig. 1 zeigt in schematischer Darstellungsweise einen Teil-Längsschnitt durch eine Kolonne mit sieben Einbauelementen,
die Fig. 1a und 1b zeigen vergrösserte Teilquerschnitte durch die in Fig. 1 angeordneten Einbauelemente.

In Fig. 2 ist in einem Teil-Längsschnitt schematisch der untere Teil einer Kolonne mit einer gegenüber Fig. 1 varianten Ausführungsform von Einbauelementen dargestellt.

Die Fig. 3, 4 und 5 zeigen perspektivische Darstellungen von drei verschiedenen Einbauelementen.

Die Fig. 6 und 6' zeigen in schematischer Darstellungsweise einen Teil-Längsschnitt durch eine Kolonne, in welcher drei, mit ebenen Zwischenlagen versehene Einbauelemente angeordnet sind, wobei die ebenen Zwischenlagen nur einen Teil der benachbarten, geriffelten Lagen gegeneinander abdecken.

Fig. 7 zeigt in einem vergrösserten Teil-Längsschnitt durch eine Kolonne ein Einbauelement mit ebenen Zwischenlagen gemäss der Fig. 6.

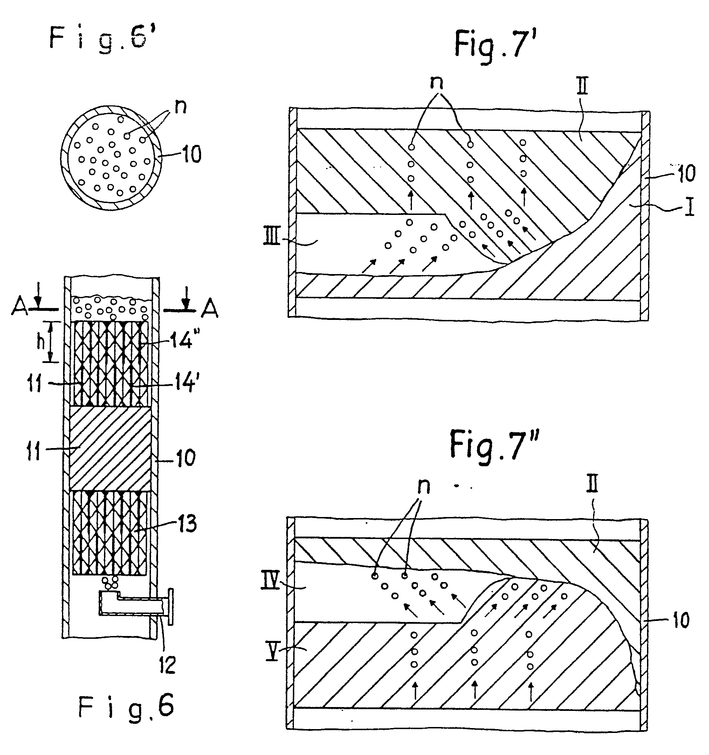

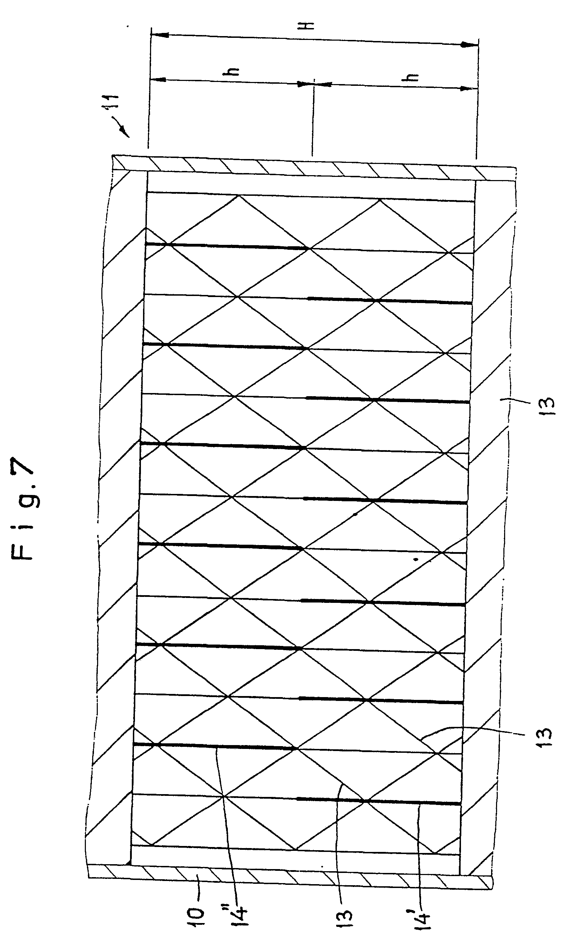

Die Fig. 7' und 7" zeigen Teil-Längsschnitte durch eine Kolonne mit Teil-Ansichten von hintereinanderliegenden Lagen eines Einbauelementes, welches der in den Fig. 6 und Fig. 7 dargestellten Ausführungsform entspricht.

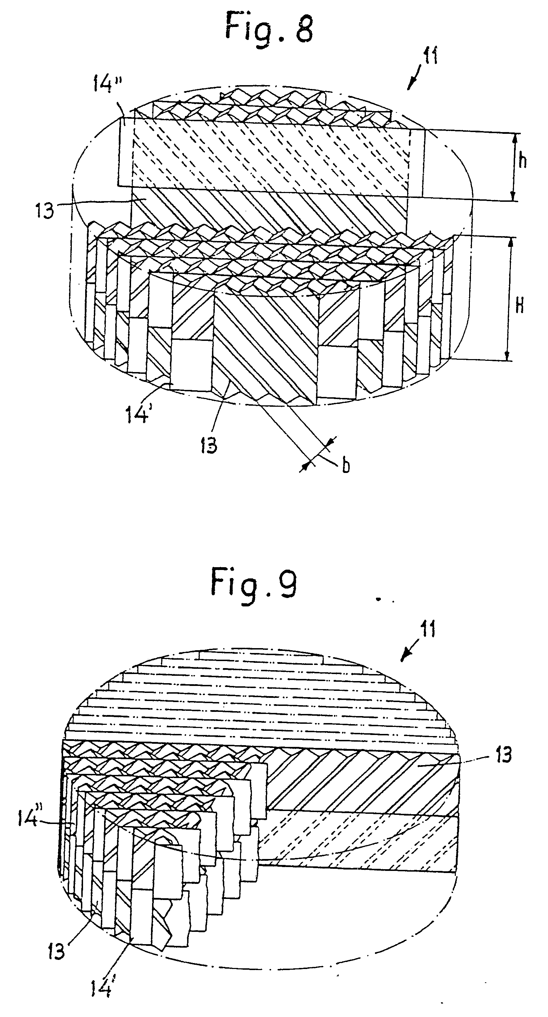

Die Fig. 8 und 9 zeigen perspektivische Darstellungen eines Teiles eines gemäss den Fig. 7, 7' und 7" ausgebildeten Einbauelementes.

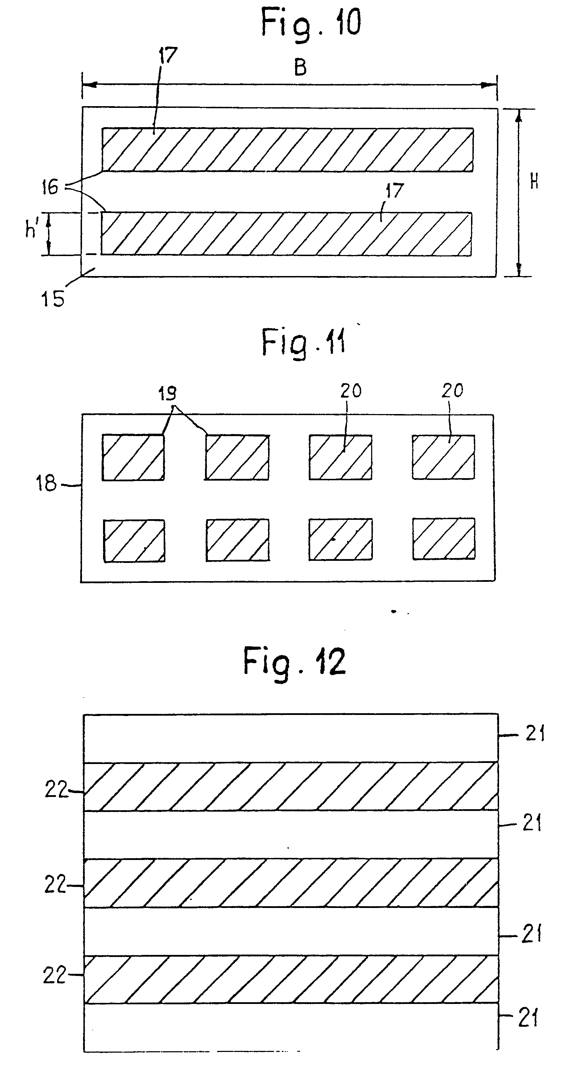

In den Fig. 10, 11 und 12 sind schematisch variante Ausführungsformen von Zwischenlagen dargestellt.

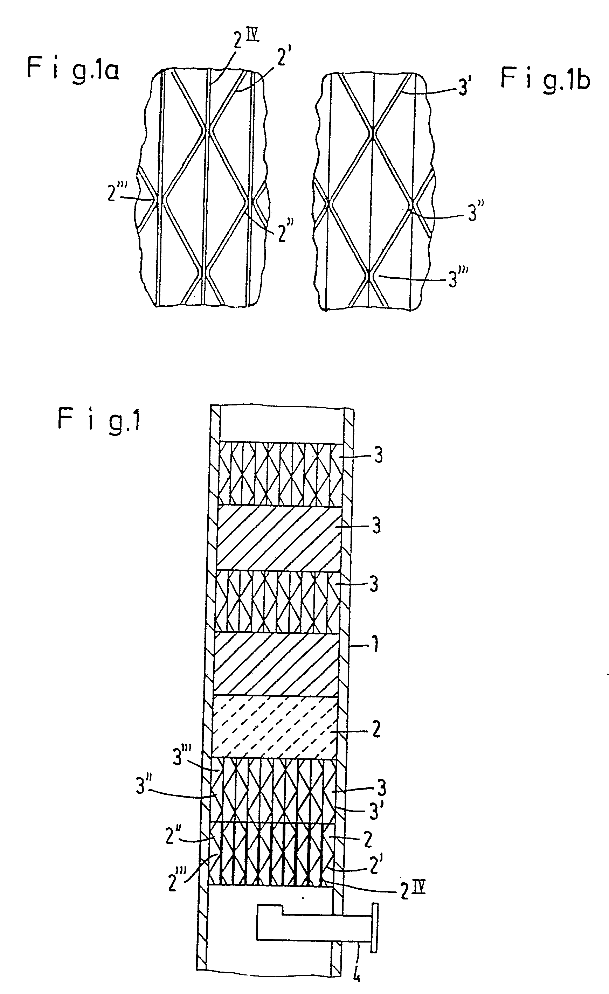

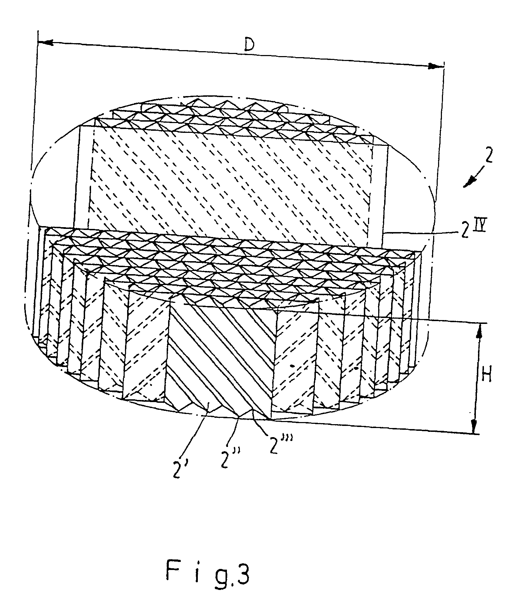

Der in Fig. 1 dargestellte Teilabschnitt einer Kolonne 1 zeigt den Einbau von sieben übereinander angeordneten Einbauelementen 2 und 3. Bei den Einbauelementen 2 handelt es sich, wie auch Fig. 1a und Fig. 3 zeigen, um Einbauelemente, die aus geriffelten Lagen 2' bestehen, wobei die Riffelungen 2" Strömungskanäle 2''' bilden und zwischen je zwei geriffelten Lagen 2', deren Riffelungen 2" sich kreuzen, ebene Zwischenlagen $2^{IV}$ eingeschoben sind.

In Fig. 3 ist die Höhe des Einbauelementes 2 mit H und der Durchmesser mit D bezeichnet.

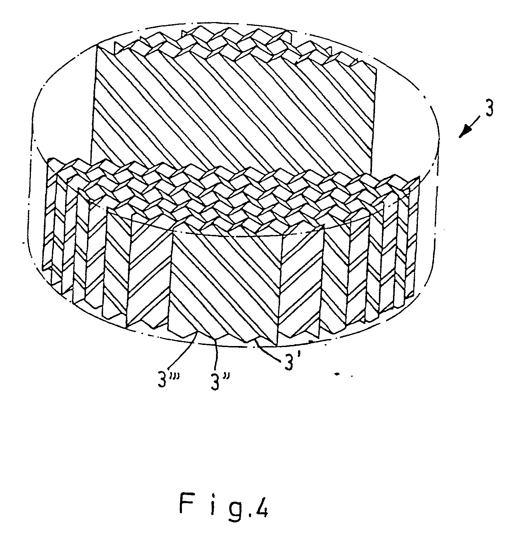

Die Einbauelemente 3 bestehen, wie auch Fig. 1b und Fig. 4 zeigen, aus geriffelten Lagen 3' mit Strömungskanälen 3''', wobei sich die Riffelungen 3" sich berührender Lagen kreuzen und somit an den Kreuzungsstellen gegeneinander offen sind.

Im Ausführungsbeispiel sei angenommen, dass die disperse Phase leichter als die kontinuierliche Phase ist und somit durch ein Zuführrohr 4 strahlförmig auf die Unterseite des untersten Einbauelementes 2 aufgegeben wird.

Im untersten Einbauelement 2 wird die disperse Phase über den Kolonnenquerschnitt längs paralleler Abschnitte des Zylinderquerschnittes verteilt. Die verteilte disperse Phase durchströmt sodann das darüber angeordnete Einbauelement 3, in welchem ein intensiver Stoffaustausch mit der die Strömungskanäle 3''' abwärts durchfliessenden kontinuierlichen, flüssigen Phase stattfindet.

Im in Fig. 1 dargestellten Ausführungsbeispiel sind aufeinanderfolgende Einbauelemente 2 und 3 nicht um 90° gegeneinander verdreht, so dass deren Lagen in parallelen Ebenen liegen.

Über dem zweituntersten Einbauelement 3 ist ein weiteres Einbauelement 2 angeordnet, dessen geriffelte und ebene Lagen um 90° gegen die Kolonnenachse verschwenkt sind, so dass eine Querverteilung der dispersen Phase rechtwinklig in parallelen Abschnitten des Zylinderquerschnittes zu der Querverteilung im zweituntersten Einbauelement 3 erfolgt.

Unter der Annahme, dass nun die disperse Phase im erforderlichen Mass gleichmässig über den gesamten Kolonnenquerschnitt verteilt ist, sind über dem zweiten Einbauelement 2 weitere Einbauelemente 3 angeordnet, wobei jeweils benachbarte Einbauelemente 3 um 90° gegeneinander verschwenkt sind. Sollte eine ein- oder mehrmalige Querverteilung der dispersen Phase vor ihrem Austritt aus der Kolonne 1 erforderlich sein, können weitere Einbauelemente 2 im Stoffaustauschteil angeordnet werden.

Das in Fig. 1 dargestellte Ausführungsbeispiel, bei welchem Einbauelemente 2 zur Querverteilung im Stoffaustauschteil der Kolonne 1 eingefügt sind, eignet sich insbesondere, wie an vorstehender Stelle erwähnt ist, für Kolonnen mit relativ kleinem Durchmesser.

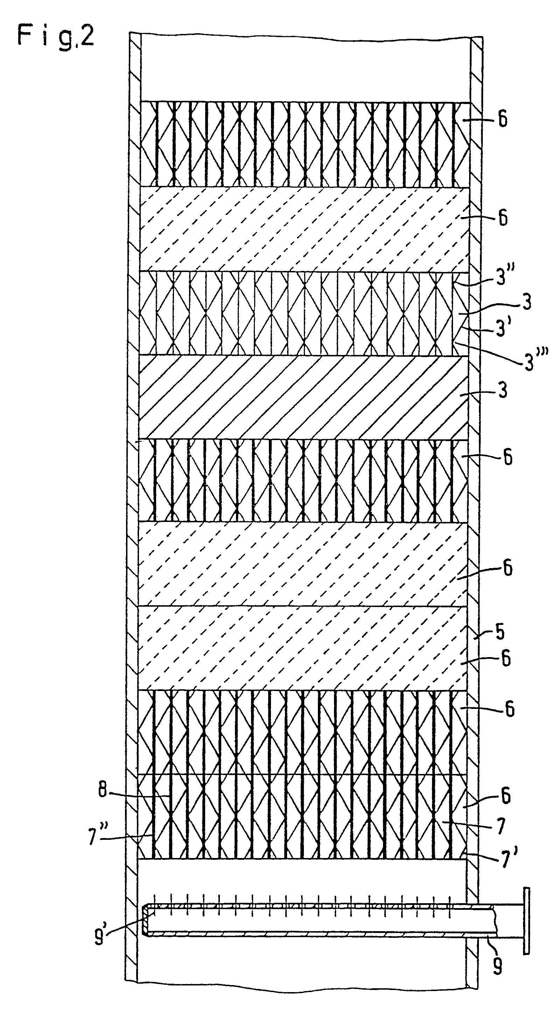

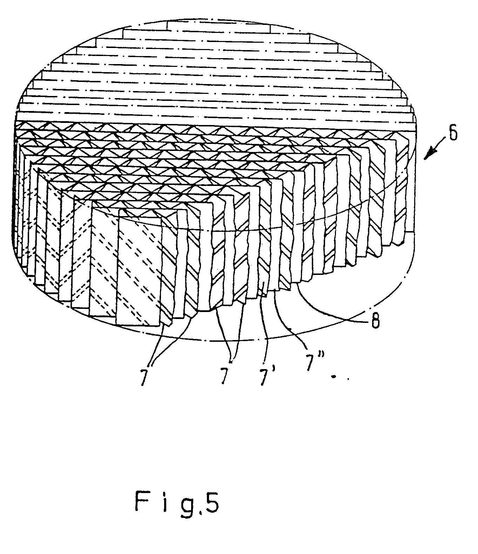

Fig. 2 zeigt den unteren Stoffaustauschabschnitt einer Kolonne 5 mit sieben Einbauelementen 6 mit Zwischenlagen und mit zwei Einbauelementen 3 ohne Zwischenlagen. Die unteren vier Einbauelemente 6 bestehen aus jeweils zwei Gruppen 7 von Lagen 7' mit paralleler Riffelrichtung mit ebenen Zwischenlagen 7", wobei sich die Riffelungen der einen Gruppe mit den Riffelungen der benachbarten Gruppe kreuzen (vergl. auch Fig. 5).

Im Ausführungsbeispiel sind zwischen den einzelnen Lagen und auch Lagengruppen Zwischenlagen 7" bzw. 8 angeordnet. Jedoch sei darauf hingewiesen, dass diese Zwischenlagen 8 auch weggelassen werden können. Ebenfalls kann eine jede Gruppe auch aus mehr als zwei Lagen mit paralleler Riffelung und ebenen Zwischenlagen bestehen. Dieses richtet sich nach dem gewünschten Bereich, in welchem eine Querverteilung der dispersen Phase in einer Richtung erfolgt und wird abhängig vom Kolonnendurchmesser bzw. von der Ausführung des Verteilers 9, der im Ausführungsbeispiel als Rohrverteiler mit Lochungen 9' ausgebildet ist, gewählt. Die Lochungen können aus Kostengründen nicht in beliebig kleinen Abständen vorgenommen werden. Ausserdem ist eine gleichmässige Beaufschlagung aller Verteillöcher nur zu erreichen, wenn über den Austrittsöffnungen ein entsprechender Druckabfall vorliegt, wobei die dadurch entstehende erhöhte Austrittsgeschwindigkeit der dispersen Phase unerwünschte feine Tröpfchen entstehen lässt.

Im Ausführungsbeispiel sind im unteren Stoffaustauschabschnitt der Kolonne 5 jeweils zwei Einbauelemente 6 derart angeordnet, dass die geriffelten bzw. ebenen Lagen in derselben Ebene liegen, so dass die Strömungskanäle der beiden Einbauelemente nahezu kontinuierlich ineinander übergehen.

Hierdurch wird erreicht, dass eine gute Querverteilung der dispersen Phase über den Kolonnenquerschnitt erzielt wird, und die einzelnen Einbauelemente 6 von einer Höhe ausgeführt sein können, die noch fertigungsmässig günstig herstellbar ist.

Wäre die Riffelrichtung der Lagen nicht paarweise gleich, sondern einzeln gegeneinander versetzt, so müsste aufgrund der Fertigungstoleranz der Elemente damit gerechnet werden, dass bei Lagenversatz die ursprüngliche Quertransportrichtung aus dem untersten Element nicht beibehalten, sondern entsprechend der Riffelrichtung in die Gegenrichtung weisen würde.

Die über den beiden untersten Einbauelementen 6 angeordneten beiden Einbauelemente sind analog ausgebildet, jedoch um einen Winkel von 90° gegenüber dem untersten Paar verschwenkt.

In Fig. 2 ist ein fünftes oberes Einbauelement 6 dargestellt. Im darüberliegenden Bereich des Stoffaustauschteiles der Kolonne 5 sind analog zu Fig. 1 zwei Einbauelemente 3 ohne Zwischenlagen, wie sie in Fig. 1 und 3 dargestellt sind, angeordnet, wobei die beiden Einbauelemente 3 um 90° gegeneinander verschwenkt sind.

Im darüberliegenden Bereich des Stoffaustauschteiles sind zwei gegeneinander um 90° verschwenkte Einbauelemente 6 angeordnet, in welchen eine erneute Quervermischung der dispersen Phase bewirkt wird.

In den Fig. 6 bis 12 sind Ausführungsformen mit Einbauelementen dargestellt, in welchen die ebenen Zwischenlagen nur einen Teil von benachbarten geriffelten Lagen abdecken.

Gemäss Fig. 6 wird in eine Kolonne 10, in welcher drei 10 Einbauelemente 11 übereinander angeordnet sind, wobei das mittlere Einbauelement gegenüber den beiden angrenzenden Einbauelementen um 90° um die Längsachse der Kolonne verschwenkt ist, durch ein Zuführrohr 12 eine disperse Phase strahlförmig auf die Unterseite des untersten Einbauelementes aufgegeben. Die Erfindung ist nicht auf diese Art der Zuführung der dispersen Phase beschränkt. So könnte die disperse Phase beispielsweise auch durch einen Rohrverteiler mit Lochungen oder durch einen Siebboden eingeleitet werden.

In Längsachse der Kolonne 10 sind zwischen je zwei benachbarten geriffelten Lagen 13 in jedem Einbauelement zwei Reihen von ebenen Zwischenlagen 14' bzw. 14" angeordnet, wobei die Zwischenlagen der übereinanderliegenden Reihen gegeneinander versetzt angeordnet sind, gleiche Höhe h aufweisen, welche der Hälfte der Höhe H der geriffelten, d.h. Strömungskanäle aufweisenden Lagen 13 entspricht (vergl. auch Fig. 7).

Aufgrund dieser Ausbildungsweise werden die Blasen bzw. Tröpfchen n der dispersen Phase gleichmässig über den Kolonnenquerschnitt verteilt, wie der Querschnitt gemäss Fig. 6' durch die Kolonne 10 längs der Schnittlinie A - A zeigt und wie noch näher anhand der Fig. 7' und 7" erläutert wird.

Anhand der Fig. 7' und 7" wird im folgenden der Strömungsweg der dispersen Phase (Tröpfchen oder Blasen n) durch ein Einbauelement, welches einer Ausführungsform, wie sie in Fig. 6 und Fig. 7 dargestellt ist, erläutert.

Die Fig. 7' und 7" zeigen in Teilansichten insgesamt fünf hintereinanderliegende, geriffelte Lagen I, II und V, die identisch mit den geriffelten Lagen 13 in den Fig. 6 und 7 sind.

Analog zu den ebenen Zwischenlagen 14' bzw. 14" in den Fig. 6 und 7 ist zwischen den geriffelten Lagen I und II eine ebene Zwischenlage III und zwischen den geriffelten Lagen II und V eine ebene Zwischenlage IV angeordnet.

Während in den Teilen des Einbauelementes 11, die ohne Zwischenlagen sich direkt berühren, die Blasen oder Tröpfchen n unbehindert von der Struktur der Strömungskanäle senkrecht nach oben steigen, werden die Blasen oder Tröpfchen n in den Teilen, in welchen zwischen zwei entgegengesetzt geriffelten Lagen eine ebene Zwischenlage eingeschoben ist, von den Strömungskanälen der geriffelten Lagen jeweils entgegengesetzt nach aussen umgelenkt.

Zu einer besseren räumlichen Vorstellung eines gemäss der vorstehend erläuterten Ausführungsform eines erfindungsgemäss ausgebildeten Einbauelementes, dienen die Fig. 8 und 9. Diese Figuren zeigen in perspektivischer Darstellung Teile eines solchen Einbauelementes, wobei die Innenwand der Kolonne 10 strichpunktiert angedeutet ist und die Breite eines ebenen Strömungskanals mit b bezeichnet ist. Im übrigen sind für alle Elemente die gleichen Bezugsziffern wie in Fig. 6 und 7 verwendet.

Anstelle von abwechslungsweise, versetzten, ebenen Zwischenlagen, wie in den Fig. 6, 7, 7', 7", 8 und 9 dargestellt ist, können die Zwischenlagen beispielsweise auch entsprechend den Fig. 10, 11 oder 12 ausgebildet werden.

Hierbei sind die Höhe H und die Breite B der in den Fig. 10 und 11 dargestellten Zwischenlagen identisch mit der Höhe und Breite der geriffelten Lagen eines Einbauelementes. Zwischen je zwei geriffelten Lagen ist eine ebene Zwischenlage angeordnet.

9

Gemäss Fig. 10 weist die Zwischenlage 15 zwei abstandsweise übereinanderliegende, sich über den grössten Teil der Breite B erstreckende, rechteckige Aussparungen 16 auf, wobei die Höhe h' jeder Aussparung mindestens der Riffelbreite b (s. Fig. 8) einer geriffelten Lage entspricht. In Fig. 10 ist die hinter der Zwischenlage 15 sich befindende, geriffelte Lage 17 sichtbar.

Die in Fig. 11 dargestellte Zwischenlage 18 weist in bezug auf die geriffelten Lagen gleiche Abmessungen auf. Anstelle der sich über nahezu über die gesamte Breite erstreckenden Aussparungen 16 in Fig. 10 weist die Zwischenlage zwei übereinander angeordnete Reihen von einzelnen quadratischen Aussparungen 19 auf, deren Höhe ebenfalls mindestens der Riffelbreite b der die Zwischenlagen berührenden Lagen entspricht. Die hinter der Zwischenlage 18 liegende geriffelte Lage ist mit der Bezugsziffer 20 bezeichnet.

Anstelle der quadratischen Aussparungen können die Aussparungen beispielsweise einen kreisförmigen, rechteckigen oder dreieckigen Querschnitt aufweisen.

Eine weitere mögliche Ausführungsform einer Zwischenlage ist in Fig. 12 schematisch dargestellt.

Abweichend von Fig. 10 und 11 besteht hier die Zwischenlage aus einzelnen abstandsweise übereinander angeordneten rechteckigen Streifen 21. Für die Bemessung der Abstände gilt das gleiche wie für die Ausführungen gemäss Fig. 10 und 11. Die hinter den Streifen der Zwischenlagen liegende geriffelte Lage ist mit der Bezugsziffer 22 bezeichnet.

Die Zwischenlagen können z. B. aus Metall oder Kunststoff bestehen, zweckmässig aus dem gleichen Material wie die geriffelten Lagen.

Die die Einbauelemente bildenden geriffelten Lagen und Zwischenlagen können z. B. miteinander durch Punktschweissung verbunden werden oder im Falle der in Fig. 10 bis 12 dargestellten Ausführungsform in eine Kolonne einzeln nacheinander eingeschoben werden und somit selbstzentrierend ausgebildet sein. Wenn erforderlich, können die Lagen auch mit der Kolonneninnenwand fest, z. B. durch Verschweissung, verbunden werden.

## Patentansprüche

1. Stoffaustauschkolonne, welche im Gegenstrom von einer kontinuierlichen und mindestens einer dispersen Phase durchströmt wird, wobei im Stoffaustauschteil der Kolonne Einbauelemente angeordnet sind, welche jeweils aus einer Mehrzahl von sich berührenden Lagen bestehen, wobei mindestens eine Anzahl der Lagen Strömungskanäle bildende Riffelungen aufweist, welche einen Winkel gegen die Kolonnenachse einschliessen, wobei die Riffelungen benachbarter Lagen sich kreuzen, *dadurch gekennzeichnet,* dass in der Kolonne (1) zwei verschiedene Ausführungsformen von Einbauelementen (2, 3) eingesetzt sind, wobei eine erste Ausführungsform

10

(3) ausschliesslich aus geriffelten Lagen (3') besteht, und eine zweite Ausführungsform (2), die sowohl geriffelte Lagen (2') aufweist als auch ebene Zwischenbleche (2$^{IV}$) von der gleichen Flächengrösse wie die geriffelten Lagen (2').

2. Stoffaustauschkolonne nach Anspruch 1, dadurch gekennzeichnet, dass die zweite Ausführungsform (6) aus jeweils zwei Gruppen (7) von Lagen (7') mit paralleler Riffelrichtung mit ebenen Zwischenlagen (7") besteht, wobei sich jeweils die Riffelungen der einen Gruppe mit den Riffelungen der anderen Gruppe kreuzen.

3. Stoffaustauschkolonne nach Anspruch 1, dadurch gekennzeichnet, dass die zwei Ausführungsformen von Einbauelementen (2, 3) längs der Kolonnenachse entweder abwechselnd einzeln oder gruppenweise abwechselnd angeordnet sind.

4. Stoffaustauschkolonne nach Anspruch 1, dadurch gekennzeichnet, dass die Anzahl der in der Kolonne (5) eingesetzten Einbauelemente (3) der ersten Ausführungsform nicht identisch mit der Anzahl der Einbauelemente (6) der zweiten Ausführungsform ist.

5. Stoffaustauschkolonne, welche im Gegenstrom von einer kontinuierlichen und mindestens einer dispersen Phase durchströmt wird, wobei im Stoffaustauschteil der Kolonne Einbauelemente angeordnet sind, welche jeweils aus einer Mehrzahl von sich berührenden Lagen bestehen, wobei mindestens eine Anzahl der Lagen Strömungskanäle bildende Riffelungen aufweist, welche einen Winkel gegen die Kolonnenachse einschliessen, wobei die Riffelungen benachbarter Lagen sich kreuzen, dadurch gekennzeichnet, dass in der Kolonne (10) gleichartige Ausgestaltungsformen von Einbauelementen (11) angeordnet sind, bei welchen mindestens zwischen einer Anzahl von benachbarten, geriffelten Lagen (13) jeweils eine ebene Zwischenlage (14' bzw. 14") angeordnet ist, die derart ausgebildet ist, dass sie nur einen Teil der geriffelten Lagen (13) gegeneinander abdeckt.

6. Stoffaustauschkolonne nach Anspruch 5, dadurch gekennzeichnet, dass das Einbauelement (11) mit ebenen Zwischenlagen (14', 14") derart ausgebildet ist, dass in Richtung der Längsachse der Kolonne (10) mindestens zwei Reihen von Zwischenlagen (14', 14") übereinander angeordnet sind, wobei die Zwischenlagen (14', 14") der übereinanderliegenden Reihen gegeneinander versetzt angeordnet sind, und die seitlichen Begrenzungen bis zur Innenwand der Kolonne (10) reichen.

7. Stoffaustauschkolonne nach Anspruch 6, dadurch gekennzeichnet, dass die Zwischenlagen (14', 14") gleiche Höhe (h) aufweisen.

8. Stoffaustauschkolonne nach Anspruch 7,

EP 0 151 693 B1

11

dadurch gekennzeichnet, dass die Höhe (h) der Zwischenlagen (14', 14") etwa der Hälfte der Riffelhöhe (H) der geriffelten Lagen (13) entspricht.

9. Stoffaustauschkolonne nach Anspruch 5, dadurch gekennzeichnet, dass die Höhe (H) der Zwischenlagen (15) mindestens nahezu der Riffelhöhe (H) der geriffelten Lagen (17) entspricht, und sich die Zwischenlagen (15) in der Breite (B) bis mindestens nahezu an die seitliche Begrenzung der benachbarten geriffelten Lagen (17) erstrecken, wobei jede Zwischenlage (15) mindestens eine sich mindestens nahezu über die gesamte Breite der Zwischenlage (15) erstreckende Aussparung (16) aufweist, deren Höhe (h') mindestens der Riffelbreite (b) der geriffelten Lagen (17) entspricht.

10. Stoffaustauschkolonne nach Anspruch 9, dadurch gekennzeichnet, dass jede Aussparung aus einer Mehrzahl von Teil-Aussparungen (19) besteht.

**Revendications**

1. Colonne d'échange de matières qui est traversée en contre-courant par une phase continue et au moins une phase dispersée, des éléments de garniture, constitués chacun d'une pluralité de couches en contact les unes avec les autres, étant placés dans la partie d'échange de matières, un certain nombre au moins des couches présentant des cannelures formant des canaux d'écoulement, lesquelles cannelures sont inclinées par rapport à l'axe de la colonne et croisent les cannelures des couches voisines, caractérisée en ce que dans la colonne 1 sont insérées deux formes de réalisation différentes d'éléments de garniture (2, 3), une première forme de réalisation (3) étant constituée exclusivement de couches cannelées (3'), et une deuxième forme de réalisation (2) présentant aussi bien des couches cannelées (2) que des tôles intercalaires planes (2$^{IV}$) de même superficie que les couches cannelées (2').

2. Colonne d'échange de matières selon la revendication 1, caractérisée en ce que la deuxième forme de réalisation (6) est constituée de deux groupes (7) de couches (7') à cannelures parallèles et couches intercalaires planes (7"), les cannelures d'un groupe croisant les cannelures de l'autre groupe.

3. Colonne d'échange de matières selon la revendication 1, caractérisée en ce que les deux formes de réalisation d'éléments de garniture (2, 3) alternent soit individuellement, soit par groupes, le long de l'axe de la colonne.

4. Colonne d'échange de matières selon la revendication 1, caractérisée en ce que le nombre d'éléments de garniture (3) de la première forme de réalisation, placés dans la colonne (5), n'est pas identique au nombre d'éléments de garniture (6) de la deuxième forme de réalisation.

5. Colonne d'échange de matières traversée en contre-courant par une phase continue et au moins une phase dispersée, des éléments de garniture, constitués chacun d'une pluralité de couches en contact les unes avec les autres, étant placés dans la partie d'échange de matières, un certain nombre au moins des couches présentant des cannelures formant des canaux d'écoulement, lesquelles cannelures sont inclinées par rapport à l'axe de la colonne et croisent les cannelures des couches voisines, caractérisée en ce que l'on place dans la colonne (10) des formes de réalisation semblables d'éléments de garniture (11) qui comportent chacun au moins une couche intercalaire plane (14' ou 14") placée entre un certain nombre de couches cannelées (13) voisines, la couche intercalaire étant telle qu'elle ne recouvre qu'une partie des couches cannelées (13).

6. Colonne d'échange de matières selon la revendication 5, caractérisée en ce que l'élément de garniture (11) comporte des couches intercalaires planes (14', 14") telles qu'au moins deux rangées de couches intercalaires (14', 14") sont superposées dans la direction de l'axe longitudinal de la colonne (10), les couches intercalaires (14', 14") des rangées superposées étant décalées les unes par rapport aux autres, et les délimitations latérales s'étendant jusqu'à la paroi intérieure de la colonne (10).

7. Colonne d'échange de matières selon la revendication 6, caractérisée en ce que les couches intercalaires (14', 14") ont une même hauteur (h).

8. Colonne d'échange de matières selon la 5 revendication 7, caractérisée en ce que la hauteur (h) des couches intercalaires (14', 14") correspond à peu près à la moitié de la hauteur (H) de la cannelure des couches cannelées (13).

9. Colonne d'échange de matières selon la revendication 5, caractérisée en ce que la hauteur (H) des couches intercalaires (15) correspond au moins à peu près à la hauteur (H) de la cannelure des couches cannelées (17), et en ce que la largeur (B) des couches intercalaires (15) s'étend jusqu'au moins à peu près la délimitation latérale des couches cannelées (17) voisines, chaque couche intercalaire (15) présentant au moins un évidement (16) s'étendant sur au moins à peu près toute la largeur de la couche intercalaire (15), évidement dont la hauteur (h') correspond au moins à la largeur de cannelure (b) des couches cannelées (17).

10. Colonne d'échange de matières selon la revendication 9, caractérisée en ce que chaque évidement est constitué d'une pluralité d'évidements partiels (19).

13

14

**Claims**

1. A mass transfer column flowed through in countercurrent by a continuous phase and at least one dispersed phase, there being disposed in the mass transfer part of the column furniture elements each in the form of a number of contacting layers, at least some of the layers having flutings which are effective as flow channels and which are at an angle to the column axis, the flutings of adjacent layers crossing one another, characterised in that two different forms (2, 3) of furniture element are used in the column (1), a first form (3) consisting exclusively of fluted layers (3') while a second form (2) has fluted layers (2') and plane intermediate plates ($2^{IV}$) of the same surface size as the fluted layers (2').

2. A column according to claim 1, characterised in that the second form (6) comprises two groups (7) of layers (7') having a parallel fluting direction with plane intermediate layers (7"), the flutings of one group crossing the flutings of the other group.

3. A column according to claim 1, characterised in that the two forms (2, 3) of furniture element are disposed along the column axis either alternately in individual form or alternately in group form.

4. A column according to claim 1, characterised in that the number of furniture elements (3) of the first form which are used in the column (5) is not identical to the number of furniture elements (6) of the second form.

5. A mass transfer column flowed through in countercurrent by a continuous phase and at least one dispersed phase, there being disposed in the mass transfer part of the column furniture elements each in the form of a number of contacting layers, at least some of the layers having flutings which are effective as flow channels and which are at an angle to the column axis, the flutings of adjacent layers crossing one another, characterised in that there are disposed in the column (10) similar forms (11) of furniture element in which one plane intermediate layer (14', 14") is disposed at least between a number of adjacent fluted layers (13), the intermediate layer masking off only some of the fluted layers (13) from one another.

6. A column according to claim 5, characterised in that the furniture element 11 is so devised with plane intermediate layers (14', 14") that at least two rows thereof are disposed one above another along the longitudinal axis of the column (10), the intermediate layers (14', 14") of the rows disposed one above another being staggered relatively to one another, the lateral boundaries extending as far as the inside wall of the column (10).

7. A column according to claim 6, characterised in that the intermediate layers (14', 14") are of the same height (h).

8. A column according to claim 7, characterised in that the height (h) of the intermediate layers (14', 14") corresponds to approximately half the fluting height (H) of the fluted layers (13).

9. A column according to claim 5, characterised in that the height (H) of the intermediate layers (15) corresponds at least substantially to the fluting height (H) of the fluted layers (17) and the intermediate layers (15) extend in the width (B) as far as at least substantially the lateral boundary of the adjacent fluted layers (17), each intermediate layer (15) being formed with at least one recess (16) which extends substantially over the whole width of the intermediate layer (15) and whose height (h') corresponds at least to the fluting width (b) of the fluted layers (17).

10. A column according to claim 9, characterised in that each recess is in the form of a number of sub-recesses (19).

F i g.1a

2 $^{IV}$

2'

2'''

2''

F i g.1b

3'

3''

3'''

F i g.1

3

3

3

1

2

3'''

3''

3'

3

3'

2''

2

2'''

2'

2 $^{IV}$

4

Fig.2

F i g.3

Fig.4

Fig.5

9

Fig.6'

Fig.7'

Fig.6

Fig.7"

11

# Fig.7

10

14"

13

14'

13                    13

11

h

H

h

EP 0 151 693 B1

13

# Fig. 8

# Fig. 9

# Fig. 10

# Fig. 11

# Fig. 12